# EUROPÄISCHE PATENTSCHRIFT

(11) **EP 0 703 138 B1**
(45) Veröffentlichungstag und Bekanntmachung des Hinweises auf die Patenterteilung: **23.04.1997**
(21) Anmeldenummer: 94250230.3
(22) Anmeldetag: 21.09.1994
(51) Int. Cl.: B62K 1/00, B62K 21/14

(54) **Federnder Lenkervorbau**
Sprung steering system front structure
Guidon de bicyclette à support élastique

(43) Veröffentlichungstag der Anmeldung: 27.03.1996
(73) Patentinhaber: Menze, Heinrich, Sen., D-58091 Hagen (DE)
(72) Erfinder: Menze, Heinrich, Sen., D-58091 Hagen (DE)
(74) Vertreter: Patentanwälte Wenzel & Kalkoff

(56) Entgegenhaltungen:
- DE-U- 9 215 744
- DE-U- 9 306 261
- FR-A- 2 234 176
- US-A- 4 939 950
- US-A- 5 181 436
- US-A- 5 241 881

## Beschreibung

Die Erfindung betrifft einen federnden Lenkervorbau für Fahrräder, der ein
- Schaftrohr mit einem oberen Ende und
- einen um eine Drehachse am oberen Ende des Schaftrohrs drehbar gelagerten Vorbauschaft
- mit einem Aufnahmering für die Lenkstange umfaßt,
- wobei eine stoßdämpfende Federvorrichtung zwischen dem Schaftrohr und dem Vorbauschaft vorgesehen ist,
- die Federvorrichtung eine Gummitorsionsfeder mit einem Gummielement ist, das zwischen einem äußeren Metallgehäuse und einer inneren Metallhülse einvulkanisiert ist,
- das Schaftrohr am oberen Ende eine Gabel aufweist, in der die Federvorrichtung mittels einer die Gabelschenkel durchgreifenden Schraube fixiert ist, so daß die innere Metallhülse an der Gabel und das äußere Metallgehäuse am Vorbauschaft befestigt ist
- und das äußere Metallgehäuse und die innere Metallhülse zur Stoßdämpfung im Falle einer Krafteinwirkung unter Torsionsbeanspruchung des Gummielementes elastisch um einen Winkel gegeneinander verdrehbar sind.

Zur Vermeidung der Übertragung von auf das Vorderrad wirkenden Stößen bis zum Lenker sind bereits verschiedenartige Feder- und Stoßdämpfungssysteme wie beispielsweise Teleskopfedersysteme bekannt geworden, die jedoch störanfällig und vor allem nicht wartungsfrei sowie teuer in der Herstellung und Montage sind.

Ein anderer Federlenkervorbau geht beispielsweise aus der Zeitschrift RADFAHREN 4/94 als bekannt hervor. Bei diesem bekannten Lenkervorbau befindet sich unterhalb der Drehlagerung des Vorbauschaftes an dem Schaftrohr ein aus einem PU-Ring bestehendes Federelement, das als Hartelastomerpuffer wirkt. Auf das Schaftrohr übertragene Stöße werden von dem Hartelastomerpuffer, an dem sich ein am unteren Ende des Vorbauschaftes befestigtes Druckstück abstützt, durch Kompression absorbiert. Mit den elastomeren PU-Ringen als Pufferelement ist nur eine Vibrationsdämpfung, nicht aber eine Federung erreichbar. Denn der maximale Federweg - und zwar nur bei Verwendung von Elastomerelementen mit sehr niedrigem Härtegrad - beträgt 1,8 cm. Insofern läßt sich der bekannte Federlenkervorbau mit einem weichen Elastomerelement zur Dämpfung von Vibrationen einsetzen, deren Übertragung aus dem Rahmen über das Schaftrohr auf den Vorbauschaft vermieden werden soll. Eine Federung ist mit der bekannten Vorrichtung jedoch nicht erreichbar.

Aus dem deutschen Gebrauchsmuster G 92 15 744 ist ein federnder Lenkervorbau der oben genannten Art zur Vermeidung der Übertragung von auf das Vorderrad wirkenden Stößen bis zum Lenker bekannt, der zwischen dem Vorbauschaft für die Lenkstange und dem oberen Ende des Schaftrohres mindestens eine Gummitorsionsfeder enthält, die in einem Drehgelenk angeordnet ist. Dabei wird das äußere Metallgehäuse der Gummitorsionsfeder drehfest von einer überkragenden Hülse umschlossen, die an dem Schaftrohr befestigt ist. Die innere Metallhülse wird durch eine Verschraubung mit dem mindestens zweiteiligen Vorbauschaft verbunden, der die Hülse teilweise umschließt. In Form zweier Zapfen greift der Vorbauschaft an beiden Endöffnungen in die Hülse ein und bildet eine Art von Lagerung, die der Torsionsfeder die zur Übertragung des zum Lenken notwendigen Momentes notwendige Seitenführung geben soll. Durch einen Hebel an der Verschraubung kann das federnde Gelenk fixiert werden, so daß die Federwirkung des Torsionsfederelementes komplett zu- oder abschaltbar ist.

Es besteht daher die Aufgabe, einen Federlenkervorbau der eingangs genannten Art zu schaffen, mit dem eine wirksame Abfederung von Fahrbahnstößen erreichbar ist und der auch eine einfache Einstellung der Federkraft zuläßt.

Erfindungsgemäß wird diese Aufgabe dadurch gelöst,
- daß die Innenflächen der Gabelschenkel und die Stirnflächen der inneren Metallhülse für einen gegenseitigen Eingriff verzahnt sind und eine Verzahnung bilden,
- daß am äußeren Metallgehäuse ein Anschlagsteg für eine Stellschraube vorhanden ist,
- die sich an der Gabel befindet,
- so daß nach dem Lösen der Schraube eine mehr oder minder hohe Vorspannung eingestellt werden kann durch Hochschwenken des Vorbauschaftes mit einer Winkelverdrehung der Verzahnung, wobei
- nach Wiederbefestigung der Schraube und Zurückdrücken des Vorbauschaftes entgegen der Federkraft des sich verdrehenden Gummielementes die Stellschraube gegen den Anschlagsteg des Metallgehäuses geschraubt und so die gewünschte Vorspannung gespeichert wird,
- daß mit einer Zunahme der Vorspannung die Federkraft des Lenkervorbaus entsprechend Zunimmt und
- daß durch das Vorschrauben oder Zurückschrauben der Stellschraube der Winkel zwischen dem Schaftrohr und dem Vorbauschaft individuell veränderbar ist.

In der Federvorrichtung wird folglich erfindungsgemäß eine bewährte Gummitorsionsfeder verwendet, mit der nicht nur eine optimale Abfederung von Stößen sondern auch die Drehlagerung zwischen dem Schaftrohr und dem Vorbauschaft bewirkt wird, wofür bei der einen vorbekannten Einrichtung zwei nebeneinander angeordnete Vorrichtungen, nämlich ein Drehlager und eine Stoßdämpfungsvorrichtung neben diesem vorgesehen sind.

Die Erfindung gestattet eine einfache Herstellung und eine konstruktiv einfache Anordnung der Gummitorsionsfeder zwischen dem Schaftrohr und dem Vorbauschaft dadurch, daß die Gummitorsionsfeder in einfacher Weise mittels einer Schraube in einer Gabel am oberen Ende des Schaftrohrs fixiert wird. Die innere Metallhülse der Gummitorsionsfeder wird lösbar mit der Schraube an den Gabelschenkeln befestigt. Der Vorbauschaft ist an dem äußeren Metallgehäuse der Feder befestigt, so daß das auf Torsion beanspruchbare ring- oder hülsenförmige Gummielement als wirksame Federung zwischen das Schaftrohr und den Vorbauschaft geschaltet ist.

Die Erfindung ermöglicht in normaler Ausführung einen Federweg bis 4 cm mit einer Gummitorsionsfeder in herkömmlicher Technik. Dadurch werden von der Gummitorsionsfeder nicht nur Vibrationen sondern auch hohe Stoßbelastungen von der Gummitorsionsfeder absorbiert und von dem Vorbauschaft und von dem Lenker des Fahrrads ferngehalten.

Die erfindungsgemäße Ausbildung des Lenkervorbaus läßt gleichzeitig eine achsgenaue Führung des Vorbauschafts in der mit der Gummitorsionsfeder verbundenen Drehlagerung zu, so daß der Vorbauschaft und der Lenker nur Bewegungen in einer vertikalen Ebene beim Einfedern gegenüber dem Vorbauschaft ausführen.

Ein sehr wesentlicher Vorteil der Erfindung besteht darin, daß eine Vorspannung der Gummitorsionsfeder in einfacher Weise dadurch einstellbar ist, daß das Metallgehäuse und die innere Metallhülse der Feder um einen Winkel elastisch gegeneinander verdreht und in der jeweils gewünschten Verdrehwinkelposition relativ zueinander festgehalten werden können. Hierfür ist eine einfache Befestigung der inneren Metallhülse mittels einer die Metallhülse durchgreifenden Schraube an den Augen der Gabelschenkel der Gabel vorgesehen, in der die Gummitorsionsfeder gehalten und gelagert ist. Die aneinander anliegenden und durch die Schraubbefestigung aufeinander gedrückten Innenflächen der Gabelschenkel einerseits und der Stirnflächen der inneren Metallhülse andererseits sind jeweils verzahnt. Die jeweils gewünschte Verdrehwinkelposition des äußeren Metallgehäuses und der inneren Metallhülse wird durch diese Verzahnung eingestellt und festgelegt. Hierfür braucht man nur die Schraube zu lösen, den Vorbauschaft hochzuschwenken, wodurch eine Winkelverdrehung der verzahnten Flächen erfolgt, anschließend die Schraube wieder zu befestigen und den Vorbauschaft entgegen der Federkraft des nun auf Torsion beanspruchten Gummielements zurückzudrücken, bis die erfindungsgemäß vorgesehene Stellschraube wieder gegen den Anschlagsteg des äußeren Metallgehäuses geschraubt und die gewünschte Vorspannung so gespeichert wird.

Ein besonderer Vorteil der Erfindung liegt auch in der Winkelverstellbarkeit des Vorbauschaftes gegenüber dem Schaftrohr, die durch Vor- oder Zurückschrauben der Stellschraube, die an dem Anschlagsteg anliegt, erreicht wird. Gleichzeitig gestattet die Stellschraube auch eine Feineinstellung der Vorspannung.

Als besonders wesentliche Eigenschaft der Erfindung ist hervorzuheben, daß die Verstellbarkeit der Federkraft durch Einstellen der jeweils erforderlichen bzw. gewünschten Vorspannung ohne Auswechslung von Teilen erreicht wird.

Vorteilhafte Weiterbildungen der vorstehend erläuterten erfindungsgemäßen Lösung finden sich in den Unteransprüchen.

Ein Ausführungsbeispiel der Erfindung wird nachstehend mit Bezug auf die Zeichnungen näher erläutert. In den Zeichnungen zeigen:
- Fig. 1: eine Vorderansicht eines federnden Lenkervorbaus, teilweise als Schnittdarstellung;
- Fig. 2: eine vergrößerte Darstellung einer Einzelheit von Fig. 1 im Schnitt;
- Fig. 3: eine Seitenansicht des Lenkervorbaus gemäß Fig. 1 und 2.

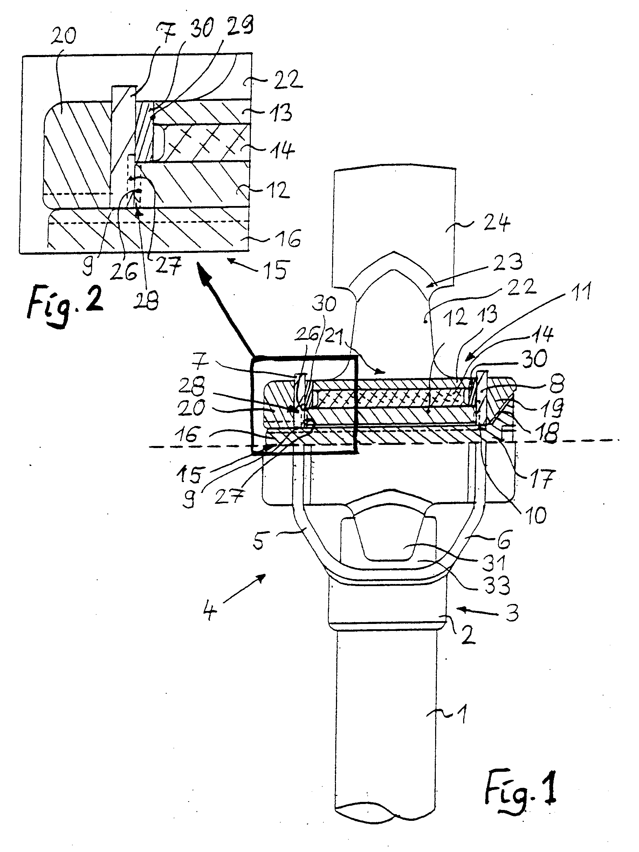

In dem in Fig. 1 dargestellten Lenkervorbau befindet sich am oberen Ende 3 eines Schaftrohrs 1 eine Aufweitung 2, an der eine Gabel 4 mit im oberen Bereich parallel zueinander verlaufenden Gabelschenkeln 5, 6 befestigt ist, die an ihren freien Enden als Augen 7, 8 jeweils mit einer zentralen Bohrung 9, 10 ausgebildet sind.

In der Gabel 4 ist eine allgemein mit 11 bezeichnete Federvorrichtung in der Ausbildung als Gummitorsionsfeder gehalten und gelagert. Die Federvorrichtung 11 besteht aus einer inneren Metallhülse 12 und einem äußeren Metallgehäuse 13, zwischen denen ein Gummielement 14 einvulkanisiert, also an den an das Gummielement 14 angrenzenden Flächen der inneren Metallhülse 12 und des äußeren Metallrohrs 13 dauerhaft befestigt ist.

Das innere Metallrohr 12 wird in gegenüber den Augen 7, 8 der Gabelschenkel 5, 6 zentrierter Lage durch eine Schraube 15 gehalten, die sich mit einem Gewindeschaft 16 durch den Hohlraum der inneren Metallhülse 12 sowie durch die Bohrungen 9, 10 in den Augen 7, 8 der Gabelschenkel 5, 6 erstreckt. Auf der mit Bezug auf die Zeichnung rechten Seite der Schraube 15 liegt diese mit einem kegelförmigen Kopf 17, der einen Innensechskant aufweist, an einer zentralen Kegelfläche 18 einer Scheibe 19 an, über die der Schraubenkopf gegen die Außenseite des Auges 8 des Gabelschenkels 6 drückt. Auf der gegenüberliegenden und mit Bezug auf die Zeichnungsdarstellung linken Seite wird zur Befestigung der Schraube 15 eine Mutter 20 auf das Ende des Gewindeschafts 16 soweit aufgeschraubt, bis die Mutter 20 fest an der Außenseite des Auges 7 des Gabelschenkels 5 anliegt und damit die aus der Schraube 15 und der inneren Metallhülse 12 sowie der Scheibe 19 und der Mutter 20 gebildete Einheit sicher an den beiden Gabelschenkeln 5, 6 befestigt ist.

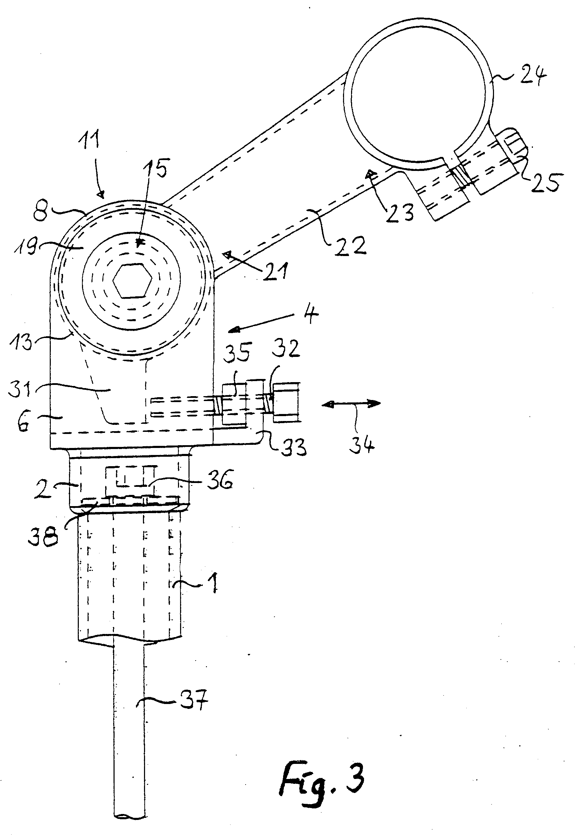

An dem äußeren Metallgehäuse 13 ist das untere Ende 21 des Vorbauschaftes 22 (vgl. auch Fig. 3) befestigt, vorzugsweise durch eine Schweißverbindung. Am oberen Ende 23 des Vorbauschaftes 22 befindet sich in üblicher Ausbildung ein Aufnahmering 24 für den nicht dargestellten Lenker, der im Aufnahmering mit einer Schraube 25 klemmbefestigt wird.

Wie insbesondere auch in Fig. 2 dargestellt ist, befinden sich an den Stirnflächen 26 - der Übersichtlichkeit halber sind die Bezugszeichen nur im linken Teil von Fig. 1 sowie in Fig. 2 eingesetzt - der inneren Metallhülse 12 sowie an den Innenflächen 27 der Augen 7, 8 der Gabelschenkel 5, 6 radial verzahnte Flächen, die zu einem gegenseitigen Eingriff bestimmt sind und eine Verzahnung 28 bilden. Zwischen den Stirnflächen 29 des äußeren Metallgehäuses 13 und den gegenüberliegenden Innenflächen der Augen 7, 8 der Gabelschenkel 5, 6, soweit diese nicht verzahnt sind, ist auf beiden Seiten jeweils eine Kunstoffscheibe 30 als Lagerring eingesetzt, die dem äußeren Metallgehäuse 13 einerseits eine Seitenführung erteilt, andererseits aber eine Verdrehung des äußeren Metallgehäuses 13 zuläßt.

An der Unterseite des äußeren Metallgehäuses 13 steht ein Anschlagsteg 31 für eine Stellschraube 32 vor, die in der aus der Zeichnung ersichtlichen Weise mit der aus Fig. 3 ersichtlichen Winkelhalterung 33 gabelseitig gehalten und in der Winkelhalterung 33 vor- und zurückschraubbar ist, wie mit dem Pfeil 34 angedeutet ist. Mit der Kontermutter 35 wird die Stellschraube 32 in der jeweils gewünschten Lage an der Winkelhalterung 33 festgelegt.

In der Aufweitung 2 befindet sich eine zentrale Öffnung, in der sich der Kopf 36 der Schaftschraube 37 mit Hilfe einer Unterlegscheibe 38 abstützt. Hierfür besitzt der Boden der Gabel 4 mittig eine Öffnung zum Einführen der Schaftschraube 37.

Aufgrund des vorstehend beschriebenen Aufbaus des dargestellten Lenkervorbaus werden Fahrbahnstöße, die vom Vorderrad bis auf das Schaftrohr 1 übertragen werden in der Federvorrichtung 11 sicher abgefedert, weil das Gummielement 14 eine elastische Verdrehung der inneren Metallhülse 12 gegenüber dem äußeren Metallgehäuse 13 gestattet.

Der dargestellte und beschriebene Aufbau gestattet gleichzeitig die Einstellung einer Vorspannung an der Federvorrichtung 11. Hierfür wird die Mutter 20 der Schraube 15 gelockert, bis die Verzahnung 28 an den Stirnflächen 26 und Innenflächen 27 eine Winkelverdrehung gestattet, so daß der Vorbauschaft 22 hochgeschwenkt werden kann und die verzahnten Stirnflächen 26 und Innenflächen 27 eine neue Winkellage einnehmen, in der sie wieder miteinander in Eingriff gebracht und durch Anziehen der Mutter 20 und damit Festspannen der Schraube 15 so aufeinandergepreßt werden, daß kein Durchrutschen dieser Flächen bei Torsionsbeanspruchung möglich ist. Der Vorbauschaft 22 wird dann wieder zurückgedrückt entgegen der Federkraft des sich elastisch verdrehenden und damit zunehmend unter Torsionsspannung stehenden Gummielementes 14, bis die Stellschraube 32 wieder mit dem Anschlagsteg 31 in Eingriff gebracht werden kann, um den Vorbauschaft 22 in dieser Winkellage festzuhalten und die erreichte Vorspannung zu speichern. Mit der Stellschraube 32 kann noch eine Feineinstellung vorgenommen werden. Auf jeden Fall läßt sich mit der Stellschraube 32 die Winkellage des Vorbauschaftes 22 gegenüber dem Schaftrohr 1 verändern.

## Patentansprüche

1. Federnder Lenkervorbau für Fahrräder, der ein
- Schaftrohr (1) mit einem oberen Ende (3) und
- einen um eine Drehachse am oberen Ende (3) des Schaftrohrs (1) drehbar gelagerten Vorbauschaft (22)
- mit einem Aufnahmering (24) für die Lenkstange umfaßt,
- wobei eine stoßdämpfende Federvorrichtung (11) zwischen dem Schaftrohr (1) und dem Vorbauschaft (22) vorgesehen ist,
- die Federvorrichtung (11) eine Gummitorsionsfeder mit einem Gummielement (14) ist, das zwischen einem äußeren Metallgehäuse (13) und einer inneren Metallhülse (12) einvulkanisiert ist,
- das Schaftrohr (1) am oberen Ende (3) eine Gabel (4) aufweist, in der die Federvorrichtung (11) mittels einer die Gabelschenkel (5, 6) durchgreifenden Schraube (15) fixiert ist, so daß die innere Metallhülse (12) an der Gabel (4) und das äußere Metallgehäuse (13) am Vorbauschaft (22) befestigt ist
- und das äußere Metallgehäuse (13) und die innere Metallhülse (12) zur Stoßdämpfung im Falle einer Krafteinwirkung unter Torsionsbeanspruchung des Gummielementes (11) elastisch um einen Winkel gegeneinander verdrehbar sind,
dadurch **gekennzeichnet**,
- daß die Innenflächen (27) der Gabelschenkel (5, 6) und die Stirnflächen (26) der inneren Metallhülse (12) für einen gegenseitigen Eingriff verzahnt sind und eine Verzahnung (28) bilden,
- daß am äußeren Metallgehäuse (13) ein Anschlagsteg (31) für eine Stellschraube (32) vorhanden ist,
- die sich an der Gabel (4) befindet,
- so daß nach dem Lösen der Schraube (15) eine mehr oder minder hohe Vorspannung eingestellt werden kann durch Hochschwenken des Vorbauschaftes (22) mit einer Winkelverdrehung der Verzahnung (28), wobei
- nach Wiederbefestigung der Schraube (15) und Zurückdrücken des Vorbauschaftes (22) entgegen der Federkraft des sich verdrehenden Gummielementes (11) die Stellschraube (32) gegen den Anschlagsteg (31) des Metallgehäuses (13) geschraubt und so die gewünschte Vorspannung gespeichert wird,
- daß mit einer Zunahme der Vorspannung die Federkraft des Lenkervorbaus entsprechend zunimmt und
- daß durch das Vorschrauben oder Zurückschrauben der Stellschraube (32) der Winkel zwischen dem Schaftrohr (1) und dem Vorbauschaft (22) individuell veränderbar ist.

2. Federnder Lenkervorbau für Fahrräder nach Anspruch 1, dadurch **gekennzeichnet**, daß das Schaftrohr (1) unterhalb der Gabel (4) eine Aufweitung (2) hat, in der sich der Kopf (36) der Schaftschraube (37) mit Hilfe einer Unterlegscheibe (38) abstutzt.

3. Federnder Lenkervorbau für Fahrräder nach Anspruch 1 oder 2, dadurch **gekennzeichnet**, daß der Boden der Gabel (4) mittig eine Öffnung hat zum Einführen der Schaftschraube (37).

4. Federnder Lenkervorbau für Fahrräder nach einem der Ansprüche 1 - 3, dadurch **gekennzeichnet**, daß die Federvorrichtung (11) innerhalb der Gabel (4) beidseitig durch Kunststoffscheiben (30) abgestützt ist.

## Claims

1. Sprung steering system front structure for bicycles having
- a shaft tube (1) with an upper end (3) and
- a front structure shaft (22) mounted so as to rotate about a rotation axis at the upper end (3) of the shaft tube (1),
- with a receiving ring (24) for the handle-bar,
- a shock absorbing spring mechanism (11) being provided between the shaft tube (1) and the front structure shaft (22),
- the spring mechanism (11) being a rubber torsion spring with a rubber element (14), which is vulcanized in between an outer metal casing (13) and an inner metal sleeve (12),
- the shaft tube (1) having at the upper end (3) a fork (4), in which is fixed the spring mechanism (11) by means of a screw (15) passing through the fork legs (5, 6), so that the inner metal sleeve (12) is fixed to the fork (4) and the outer metal casing (13) to the front structure shaft (22) and
- the outer metal casing (13) and the inner metal sleeve (12) being elastically rotatable against one another about an angle for shock absorption in the case of a force action under torsional stressing of the rubber element (11),
**characterized** in that
- the inner faces (27) of the fork legs (5, 6) and the front faces (26) of the inner metal sleeve (12) are serrated for a reciprocal engagement and form a tooth system (28),
- on the outer metal casing (13) is provided a stop web (31) for a setscrew (32),
- which is located on the fork (4),
- so that following the loosening of the screw (15) a varyingly high pretension can be set by swinging up the front structure shaft (22) with an angular rotation of the tooth system (28), in which
- after retightening the screw (15) and forcing back the front structure shaft (22) against the spring tension of the rotating rubber element (11), the setscrew (32) is screwed against the stop web (31) of the metal casing (13) and in this way the desired pretension is stored,
- with an increase in the pretension the spring tension of the steering system front structure correspondingly increases and
- by loosening or tightening the setscrew (32) the angle between the shaft tube (1) and the front structure shaft (22) can be individually varied.

2. Sprung steering system front structure for bicycles according to claim 1, wherein the shaft tube (1) is provided below the fork (4) with a widening (2), in which is supported the head (36) of the shaft screw (37) with the aid of a washer (38).

3. Sprung steering system front structure for bicycles according to claim 1 or 2, wherein the bottom of the fork (4) is centrally provided with an opening for inserting the shaft screw (37).

4. Sprung steering system front structure for bicycles according to one of the claims 1 to 3, wherein the spring mechanism (11) within the fork (4) is supported on either side by plastic disks (30).

## Revendications

1. Potence de guidon à support élastique pour bicyclette qui comprend
- un tube de tige (1) avec une extrémité supérieure (3) et
- une tige de potence (22) positionnée rotative autour d'un axe de rotation à l'extrémité supérieure (3) du tube de tige (1)
- avec un anneau de logement (24) pour le guidon,
- un dispositif élastique (11) amortisseur de chocs étant prévu entre le tube de tige (1) et la tige de potence (22),
- le dispositif élastique (11) étant un ressort à torsion en caoutchouc avec un élément en caoutchouc (14) qui est incorporé en étant vulcanisé entre un bâti métallique extérieur (13) et une douille métallique intérieure (12),
- le tube de tige (1) présentant à l'extrémité supérieure (3) une fourche (4) dans laquelle le dispositif élastique (11) est fixé au moyen d'une vis (15) qui traverse les montants de la fourche (5, 6) si bien que la douille métallique intérieure (12) est fixée à la fourche (4) et le bâti métallique extérieur (13) à la tige de potence (22)
- et le bâti métallique extérieur (13) et la douille métallique intérieure (12) pouvant être tordus l'un contre l'autre de manière élastique autour d'un angle pour amortir les chocs dans le cas de l'influence de force sous l'effort de torsion de l'élément en caoutchouc (11)
caractérisée en ce
- que les faces intérieures (27) des montants de la fourche (5, 6) et les faces frontales (26) de la douille métallique intérieure (12) sont dentées pour un engrènement mutuel et forment un engrenage (28),
- qu'une barrette de butée (31) existe sur le bâti métallique extérieur (13) pour une vis de réglage (32)
- qui se trouve sur la fourche (4),
- si bien qu'après avoir desserré la vis (15) une précontrainte plus ou moins élevée peut être réglée en faisant pivoter vers le haut la tige de potence (22) avec une torsion angulaire de l'engrenage (28),
- la vis de réglage (32) se vissant contre la barrette de butée (31) du bâti métallique (13) après avoir fixé à nouveau la vis (15) et repoussé la tige de potence (22) à l'encontre de l'effet de ressort de l'élément en caoutchouc (11) qui se tord et la précontrainte souhaitée étant ainsi accumulée de telle manière
- que l'élasticité de la potence de guidon augmente en correspondance avec un accroissement de la précontrainte et
- que l'angle entre le tube de tige (1) et la tige de potence (22) peut être varié individuellement en vissant au préalable ou en dévissant la vis de réglage (32).

2. Potence de guidon à support élastique pour bicyclette selon la revendication 1, caractérisée en ce que le tube de tige (1) a, au-dessous de la fourche (4), un élargissement (2) dans lequel la tête (36) de la vis de tige (37) s'appuie à l'aide d'une rondelle plate (38).

3. Potence de guidon à support élastique pour bicyclette selon la revendication 1 ou 2, caractérisée en ce que le fond de la fourche (4) a au milieu une ouverture pour introduire la vis de tige (37).

4. Potence de guidon à support élastique pour bicyclette selon l'une des revendications 1 à 3, caractérisée en ce que le dispositif élastique (11) est supporté à l'intérieur de la fourche (4) des deux côtés par des rondelles en matière plastique (30).
